# EUROPÄISCHE PATENTSCHRIFT

(11) **EP 0 418 615 B1**
(45) Veröffentlichungstag und Bekanntmachung des Hinweises auf die Patenterteilung: **14.06.1995**
(21) Anmeldenummer: 90116739.5
(22) Anmeldetag: 31.08.1990
(51) Int. Cl.: B60R 3/02

(54) **Klapptritt für Wohnmobile und dergleichen Fahrzeuge**
Folding step for mobile homes and similar vehicles
Marche escamotable pour camping-cars et véhicules similaires

(30) Priorität: 13.09.1989 DE 8910933 U
(43) Veröffentlichungstag der Anmeldung: 27.03.1991
(73) Patentinhaber: HYMER LEICHTMETALLBAU GmbH & Co. KG, D-88228 Wangen (DE)
(72) Erfinder: Lang, Fritz, W-7988 Wangen/Allgäu (DE); Boetzelen, Rudolph, W-7988 Wangen/Allgäu (DE)
(74) Vertreter: Riebling, Peter, Dr.-Ing.

(56) Entgegenhaltungen:
- DE-A- 2 555 468
- DE-A- 2 927 186
- DE-A- 3 708 498
- DE-B- 1 220 276
- FR-A- 2 572 036
- GB-A- 15 077
- US-A- 3 494 634
- US-A- 4 073 502
- US-A- 4 073 502

## Beschreibung

Die Erfindung betrifft eine Vorrichtung zum Verschwenken eines Klapptritts relativ zu einem Wohnmobil oder dgl. Fahrzeug von einer ausgeklappten Arbeitsstellung in eine eingeklappte Transportstellung bzw. umgekehrt mit beidseits des Klapptritts vorgesehenen Mehrgelenksystemen, jeweils mit einem ersten Schwenkarm, der mit einem seiner Enden im hinteren Bereich des Klapptritts am Klapptritt befestigt ist und mit einem zweiten Schwenkarm, der mit einem seiner Enden vor der Befestigung des ersten Schwenkarms schwenkbar am Klapptritt befestigt ist.

Eine Vorrichtung mit diesen Merkmalen beschreibt die deutsche Offenlegungsschrift 25 55 468. Der Klapptritt wird dort aus einer eingeschwenkten Transportlage in die herausgeschwenkte Arbeitsstellung über einen Schwenkweg verschwenkt, der im wesentlichen horizontal verläuft. Damit ist aber der Nachteil verbunden, daß ein Benutzer des Klapptritts von dem plötzlich herausschwenkenden Klapptritt, er in der Regel motorisch betätigt wird, verletzt wird. Diese Verletzungsgefahr wird noch akzentuiert durch die rechteckigen Kanten an der Vorderseite des Klapptritts.

Bei dieser bekannten Vorrichtung ist es fernerhin nachteilig, daß der erste Schwenkarm in der Transportstellung waagerecht nach hinten zeigt, so daß diese bekannte Vorrichtung verhältnismäßig viel Platz (Bautiefe) benötigt.

Eine ähnliche Vorrichtung beschreibt die US-A-4 073 502 oder auch die US-A- 3 494 634, wobei allerdings beide Schwenkarme an den Klapptritt angelenkt sind.

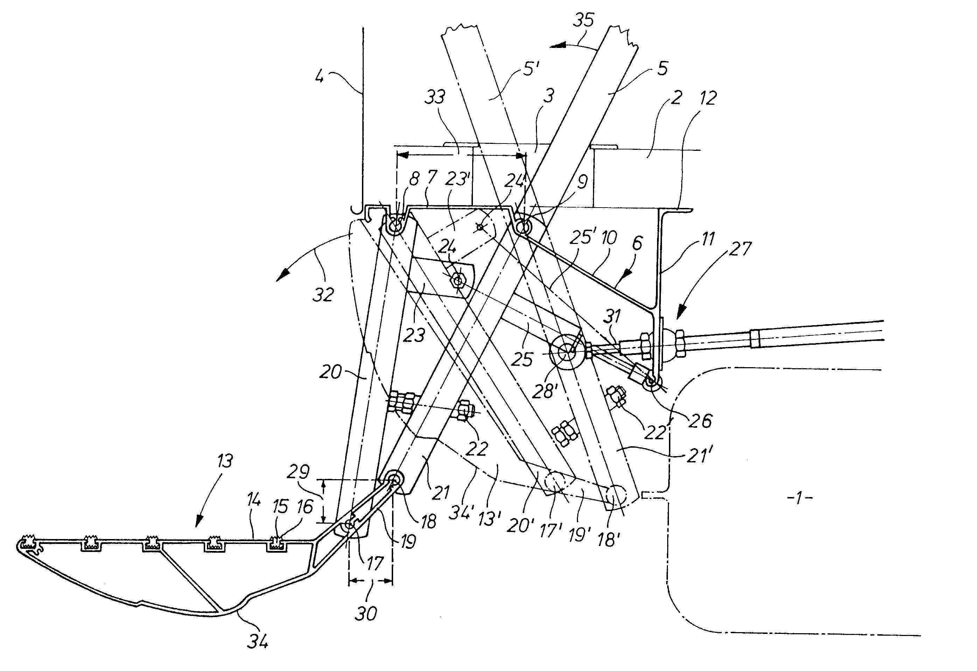

Eine weitere Vorrichtung dieser Art ist in der US-A- 3 494 634 beschrieben, wo ein reines Parallelogrammgestänge vorhanden ist, welches beim Übergang von Figur 5 auf Figur 6 für ein zum Boden paralleles Herunterschwenken des Klapptrittes 40 sorgt. Durch das plötzliche Herausstoßen des Klapptrittes 40 bei Betätigung der Klappvorrichtung, ist für den Benutzer und andere Personen eine Verletzungsgefahr gegeben. Durch einen fehlenden verlängerten Bedienungshebel ist diese Vorrichtung nicht vom Inneren des Fahrzeugs aus bedienbar.

Ausgehend von einer Vorrichtung mit den eingangs genannten Merkmalen liegt der Erfindung die Aufgabe zugrunde, diese so auszugestalten, daß eine leichte Bedienbarkeit der Klappvorrichtung erreicht wird, und diese in ausgeklapptem Zustand eine stabile, verstellbare Endlage einnimmt, wobei durch eine harmonische und kompakte Ausgestaltung der Vorrichtung, die Gefahr von Verletzungen weitgehend vermieden werden soll.

Zur Lösung dieser Aufgabe ist die Erfindung dadurch gekennzeichnet, daß ein Betätigungshebel in den Innenraum des Fahrzeugs hineinragt, und drehfest mit dem Schwenkarm verbunden ist, und sich eine Einstellschraube zwischen den Schwenkarmen wirksam befindet, der sich in Gebrauchslage des Klapptrittes in einem vertikalen Abstand von beiden Schwenklagern des Klapptrittes befindet, und der Klapptritt in eingeschwenktem Zustand die gesamte Klappvorrichtung nach außen hin abdeckt.

Bedingt durch diese Merkmale ergibt sich eine einfache Bedienbarkeit der Klappvorrichtung, da mit einer relativ geringen Schwenkbewegung des Betätigungshebels, welcher in den Innenraum des Fahrzeugs hineinragt, ein vollständiges Ausschwenken des Klapptrittes von der Ruhein die Gebrauchslage möglich ist.

Weiterhin wird durch eine vorgesehene Einstellschraube, der in der ausgeklappten Endlage der Vorrichtung wirksam wird, diese stabilisiert.
Die Einstellschraube erlaubt es außerdem, die Endlage des Klapptrittes in einem gewißen Bereich einstellen zu können, so daß die Vorrichtung leicht an verschiedene Fahrzeugtypen angepaßt werden kann.

Durch eine geringe Bautiefe und kompakten Ausgestaltung der Vorrichtung verringert sich die Gefahr von Verletzungen eines Benutzers, wobei die vorgesehene Klapprichtung, nämlich von oben nach unten, stark dazu beiträgt. In der Transportstellung nimmt der Klapptritt eine verhältnismäßig steile Lage ein, was ebenfalls zur Verringerung der Bautiefe der Vorrichtung beiträgt, wie auch zur Verringerung der Verletzungsgefahr.

Hier ist eine wichtige Ausgestaltung der Erfindung dadurch gekennzeichnet, daß die Unterseite des Klapptritts nach unten gewölbt ist mit einer abgerundeten Kante am Übergang der Unterseite zur Trittfläche des Klapptritts. Durch diese Profilierung des Klapptritts wird ebenfalls die Gefahr von Verletzungen fühlbar herabgesetzt.

Eine weitere Ausgestaltung der Erfindung ist dadurch gekennzeichnet, daß die Unterseite des Klapptritts in ihrem Profil der Profilform der seitlichen Schwellerwand des Fahrzeugs entspricht. Bei eingeschwenktem Klapptritt wird dadurch ein fast nahtloser Übergang vom Klapptritt zum Schwellerrandprofil des Fahrzeugs hergestellt.

Weitere Merkmale und Vorteile der Erfindung werden nun anhand der Zeichnung näher erläutert.

Hierbei zeigt die Zeichnung schematisiert in Seitenansicht die rechte Seite eines Klapptritts nach der Neuerung in ausgeschwenktem und eingeschwenktem Zustand.

Das Fahrzeug ist lediglich schematisiert angedeutet, wobei die Seitenkante der Seitenwand des Fahrzeugs erkennbar ist, zusammen mit dem Fahrzeugboden 2 und einem unter dem Fahrzeugboden 2 angeordneten Fahrzeugtank 1.

In dem verbleibenden Abstand zwischen der Seitenkante des Fahrzeugtanks 1 und der Seitenkante 4 des Fahrzeugs ist der erfindungsgemässe Klapptritt 13 angeordnet.

Als chassisnahes Lager für den Klapptritt wird ein Trägerprofil 6 verwendet, welches zunächst im Bereich eines vorderen, horizontalen Schenkels 7 ein erstes Lager 8 ausbildet. Der horizontale Schenkel 7 geht etwa dann im Mittenbereich (bezüglich der Einbautiefe) in einen schräg nach unten geneigten Schenkel 10 über, an dessen oberem Ende das zweite, chassisnahe Lager 9 für die Arme 20,21 angeordnet ist.

Der schräg nach unten geneigte Schenkel 10 geht seinerseits wiederum in einen vertikalen Schenkel 11 über, der mit Hilfe eines Lappens 12 an der Unterseite des Fahrzeugbodens angeschraubt ist.

Im übrigen ist noch der horizontale Schenkel 7 in seinem oberen Bereich mit dem Fahrzeugboden 2 verschraubt.

Der Betätigungshebel 5 zur Verschwenkung des Klapptritts greift durch eien Ausnehmung 3 im Fahrzeugboden 2 in das Fahrzeug hinein und ist dort leicht zugänglich im Eingangsbereich des Fahrzeugs angebracht.

Wichtig ist, daß das Profil 14 des Klapptritts 13 eine abgerundete Unterseite 34 aufweist, so daß bei eingeschwenktem Klapptritt 13' die Unterseite 34' etwa der Profilgebung der Schwellerwand des Fahrzeugs entspricht. Damit ragt der Klapptritt in eingeschwenktem Zustand nicht in unschöner Weise über die untere Schwellerwand des Fahrzeugs hervor, sondern schließt mit dieser bündig ab.

Der vordere Arm 20 ist an seiner einen Seite in dem Lager 8 im Bereich des Trägerprofils 6 aufgenommen und sein anderes Lager 17 ist in einem Hebel 19 angeordnet, der Teil des Profils 14 des Klapptritts 13 ist.

Das zweite Lager 18 des Hebels 19 setzt am schwenkbaren Ende des Armes 21 an.

Das hintere Lager 18 ist im vertikalen Abstand 29 über dem vorderen Lager 17 angeordnet, während das hintere Lager 18 im horizontalen Abstand 30 hinter dem vorderen Lager 17 angeordnet ist.

Bei der Verschwenkung des Betätigungshebels 5 in Pfeilrichtung 35 verschwenkt dieser in seine Stellung 5'. Dadurch schwenkt der Klapptritt 13 um das hintere Lager 18 als Drehpunkt im Uhrzeigersinn nach innen, so daß der Klapptritt dann seine Stellung 13' einnimmt.

Wichtig ist, daß die Unterseite 34 des Klapptritts 13 dann etwa bündig mit der Schwellerwand des Fahrzeugs (nicht dargestellt) abschließt.

Durch den relativ kurzen Hebel 19 zwischen den Lagern 17 und 18 wird die geforderte geringe Bautiefe erreicht.

In eingeschwenktem Zustand liegen die beiden Arme 20', 21' dicht beieinander, so daß nur eine geringe Bautiefe ausreicht, den Klapptritt zwischen dem Tank 1 und der Seitenkante 4 des Fahrzeugs unterzubringen.

Zur Unterstützung der Schwenkbewegung ist eine Gasdruckfeder 25 vorgesehen, die an einem Lager 26 im Bereich des Trägerprofils 7 angeordnet ist und sich mit ihrem anderen Ende an einem Lager 24 im Bereich einer Lasche 23 abstützt, die mit dem vorderen Arm 20 verbunden ist. In der Abbildung ist die Gasdruckfeder 25 in ihrer Stellung eingezeichnet, wenn der Klapptritt 13 ausgeschwenkt ist. Man erkennt, daß sich das Lager 24 unterhalb des Lagers 8 befindet und daß auch die Kraftangriffslinie der Gasdruckfeder 25 unterhalb des Lagers 8 verläuft. Daraus ergibt sich, daß die Gasdruckfeder den ausgeschwenkten Klapptritt 13 in Offenstellung vorspannt.

In eingefahrener Stellung ist die Gasdruckfeder 25' lediglich durch eine Linie angedeutet. Man erkennt, daß sich dann das Lager 24' neben dem Lager 8 befindet und daß die Kraftangriffslinie der Gasdruckfeder 25' nun sich oberhalb des Lagers 8 erstreckt, woraus sich ergibt, daß bei eingeschwenktem Klapptritt 13' dieser in Schließstellung durch die Gasdruckfeder 25' vorgespannt wird.

Zur Einstellung der Schwenklage bei ausgeschwenktem Klapptritt ist eine Einstellschraube 22 vorgesehen, die beispielsweise in eine fest mit dem Lenkerarm 21 verbundene Gewindebuchse eingeschraubt ist und sich mit ihrem Kopf am anderen Lenkerarm 20 abstützt.

Anstatt des hier beschriebenen Betätigungshebels 5 kann auch die Betätigung über einen Bowdenzug 27 erfolgen. Dieser ist im vertikalen Schenkel 11 des Trägerprofils 6 gelagert und das Betätigungsteil 31 ist mit einer Welle 28 verbunden, welche die beiden Lenkerarme 21 jeder Klapptrittseite miteinander verbindet.

Dadurch, daß der horizontale Abstand 33 zwischen den chassisseitigen Lagern 8,9 größer ist als der horizontale Abstand 30 zwischen den Schwenklagern 17,18 ergibt sich eine besonders günstige Hebelübersetzung und damit eine besonders einfache und kräftesparende Verschwenkung des gesamten Klapptritts in Pfeilrichtung 32 und in Gegenrichtung hierzu.

### ZEICHNUNGS-LEGENDE

- 1: Fahrzeugtank
- 2: Fahrzeugboden
- 3: Ausnehmung
- 4: Seitenkante
- 5: Betätigungshebel
- 6: Trägerprofil
- 7: horiz. Schenkel
- 8: Lager
- 9: Lager
- 10: Schenkel
- 11: Schenkel
- 12: Lappen
- 13: Klapptritt
- 14: Profil
- 15: Profilkanal
- 16: Trittgummi
- 17: Lager
- 18: Lager
- 19: Hebel
- 20: Arm
- 21: Arm
- 22: Einstellschraube
- 23: Lasche
- 24: Lager
- 25: Gasdruckfeder
- 26: Lager
- 27: Bowdenzug
- 28: Welle
- 29: Abstand
- 30: Abstand
- 31: Betätigungsteil
- 32: Pfeilrichtung
- 33: Abstand
- 34: Unterseite
- 35: Pfeilrichtung

## Patentansprüche

1. Vorrichtung zum Verschwenken eines Klapptritts (13) relativ zu einem Wohnmobil oder dgl. Fahrzeug von einer ausgeklappten Arbeitsstellung in eine eingeklappte Transportstellung bzw. umgekehrt mit beidseits des Klapptritts (13) vorgesehenen Mehrgelenksystemen, jeweils mit einem ersten Schwenkarm (21), der mit einem seiner Enden im hinteren Bereich des Klapptritts (13) am Klapptritt (13) befestigt ist, und mit einem in gleicher Schwenkebene angeordneten zweiten Schwenkarm (20), der mit einem seiner Enden vor der Befestigung des ersten Schwenkarmes (21) schwenkbar am Klapptritt (13) befestigt ist, wobei die Anordnung der Mehrgelenkssysteme so getroffen ist, daß der Klapptritt (13) in einem von oben nach unten und außen gerichteten Bogen (Pfeil 32) von der Transportstellung in die Arbeitsstellung verschwenkt wird,
**dadurch gekennzeichnet**, daß
ein Betätigungshebel (5) in den Innenraum des Fahrzeugs hineinragt, und drehfest mit dem Schwenkarm (21) verbunden ist, und sich eine Einstellschraube (22) zwischen den Schwenkarmen (21,20) wirksam befindet, der sich in Gebrauchslage in einem vertikalen Abstand von beiden Schwenklagern (17,18) des Klapptritts (13) befindet, und der Klapptritt (13) in eingeschwenktem Zustand die gesamte Klappvorrichtung nach außen hin abdeckt.

2. Vorrichtung nach Anspruch 1, **dadurch** **gekennzeichnet**, daß die Unterseite (34) des Klapptritts (13) nach unten gewölbt ist mit einer abgerundeten Kante am Übergang der Unterseite (34) zur Trittfläche (14) des Klapptritts (13).

3. Vorrichtung nach Anspruch 1 oder 2,
**dadurch gekennzeichnet**, daß
die Unterseite (34) des Klapptritts (13) in ihrem Profil der Profilform der seitlichen Schwellerwand des Fahrzeugs entspricht.

## Claims

1. A device for swivelling a folding step (13) relative to a camper van or similar vehicle from a folded out working position into a folded in transport position or vice versa with multiple articulation systems provided on both sides of the folding step (13), in each case with a first swivel arm (21), which is secured to the folding step (13) by one of its ends in the rear region of the folding step (13), and with a second swivel arm (20) arranged in the same swivel plane, which second swivel arm (20) is secured in a swivelling manner to the folding step (13) by one of its ends in front of the attachment of the first swivel arm (21), in which the arrangement of the multiple articulation systems is made such that the folding step (13) is swivelled in an arc (arrow 32) directed from above downwards and outwards from the transport position into the working position, characterised in that an actuating lever (5) projects into the interior of the vehicle and is connected with the swivel arm (21) so as to be secure with regard to torsion and an adjusting screw (22) is operatively situated between the swivel arms (21,20), which is situated in position of use at a vertical distance from the two swivel bearings (17,18) of the folding step (13), and the folding step (13) in swivelled-in state covers the entire folding device towards the exterior.

2. A device according to Claim 1, characterised in that the underside (34) of the folding step (13) is curved downwards with a rounded edge at the transition of the underside (34) to the step surface (14) of the folding step (13).

3. A device according to Claim 1 or 2, characterised in that the underside (34) of the folding step (13) corresponds in its profile to the profile shape of the lateral sill wall of the vehicle.

## Revendications

1. Dispositif pour faire pivoter une marche escamotable (13) par rapport à un camping-car ou un véhicule similaire d'une position de travail dépliée à une position de transport repliée et inversement, comprenant des systèmes d'articulations multiples prévus des deux côtés de la marche escamotable (13) et formés d'un premier bras pivotant (21) dont l'une des extrémités est fixée à la marche escamotable (13) dans la zone arrière de celle-ci, et d'un second bras pivotant (20) disposé dans le même plan de pivotement et dont l'une des extrémités est fixée pivotante à la marche escamotable (13), devant la fixation du premier bras pivotant (21), étant précisé que l'agencement des systèmes à articulations multiples est tel que la marche escamotable (13) pivote de la position de transport vers la position de travail suivant une courbe (flèche 32) dirigée du haut vers le bas et vers l'extérieur,
caractérisé en ce qu'un levier d'actionnement (5) fait saillie à l'intérieur du véhicule et est relié, solidaire en rotation, au bras pivotant (21), et il est prévu, agissant entre les bras pivotants (21, 20), une vis de réglage (22) qui, en position d'utilisation, se trouve à une distance verticale des deux paliers de pivotement (17, 18) de la marche escamotable (13), et celle-ci, en position repliée, couvre l'ensemble du dispositif escamotable par rapport à l'extérieur.

2. Dispositif selon la revendication 1, caractérisé en ce que le côté inférieur (34) de la marche escamotable (13) est bombé vers le bas et présente un bord arrondi au niveau de la transition entre le côté inférieur (34) et la surface supérieure (14) de la marche escamotable (13).

3. Dispositif selon la revendication 1 ou 2, caractérisé en ce que le profil du côté inférieur (34) de la marche escamotable (13) correspond à la forme profilée de la paroi de seuil latérale du véhicule.
